# EUROPEAN PATENT APPLICATION

(11) **EP 4 472 302 A1**
(43) Date of publication of application: **04.12.2024**
(21) Application number: 23769654.7
(22) Date of filing: 09.03.2023
(51) Int. Cl.: H04W 56/00

(54) **POSITIONING METHOD AND COMMUNICATION APPARATUS**

(30) Priority: 14.03.2022 CN 202210249735; 11.04.2022 CN 202210374283
(71) Applicant: Huawei Technologies Co., Ltd., Shenzhen, Guangdong 518129 (CN)
(72) Inventor: CHEN, Ying, Shenzhen, Guangdong 518129 (CN); KONG, Chuili, Shenzhen, Guangdong 518129 (CN); WANG, Yu, Shenzhen, Guangdong 518129 (CN); ZHOU, Yue, Shenzhen, Guangdong 518129 (CN); QIAO, Yunfei, Shenzhen, Guangdong 518129 (CN)
(74) Representative: Goddar, Heinz J.
(86) International application number: PCT/CN2023/080455
(87) International publication number: WO 2023/174148

(57) **Abstract**

A positioning method and a communication apparatus are provided. In the method, a terminal device determines a first TA between the terminal device and an access network device at a first moment, and sends, to a network device, a first parameter corresponding to the first TA. The terminal device determines a second TA between the terminal device and the access network device at a second moment, and sends, to the network device, a second parameter corresponding to the second TA. The network device positions the terminal device based on the first parameter and the second parameter; or the network device sends the first parameter and the second parameter to another network device, to position the terminal device. In the method, the terminal device can be positioned based on communication between the terminal device and one network device, so that the method can be applied to a satellite communication scenario, to resolve a problem of positioning a terminal device when the terminal device can be covered only by one satellite.

## Description

### CROSS-REFERENCE TO RELATED APPLICATIONS

This application claims priority to Chinese Patent Application No. 202210249735.2, filed with the China National Intellectual Property Administration on March 14, 2022 and entitled "POSITIONING METHOD AND COMMUNICATION APPARATUS", which is incorporated herein by reference in its entirety; and this application claims priority to Chinese Patent Application No. 202210374283.0, filed with the China National Intellectual Property Administration on April 11, 2022 and entitled "POSITIONING METHOD AND COMMUNICATION APPARATUS", which is incorporated herein by reference in its entirety.

### TECHNICAL FIELD

This application relates to the field of wireless communication, and in particular, to a positioning method and a communication apparatus.

### BACKGROUND

Compared with terrestrial communication, satellite communication has unique advantages. For example, the satellite communication can provide a wider coverage area, and satellite base stations are not vulnerable to natural disasters or external forces. If the satellite communication is introduced into a future 5G communication system, a communication service can be provided for some areas that cannot be covered by a terrestrial communication network, for example, an ocean or a forest; reliability of the 5G communication system can be enhanced, for example, it can be ensured that a user on an airplane or a train obtains a better communication service; and more resources for data transmission can be provided for the 5G communication system, for network rate increase. Therefore, supporting both the terrestrial communication and the satellite communication is a development direction of the future 5G communication system, and has great benefits in terms of wide coverage, reliability, multi-connection, high throughput, and the like.

Currently, the satellite communication has been introduced into the 3GPP standard, and is used as a communication scenario of 5G communication. In the standard, to adapt to characteristics of a large delay and high mobility, a timing technology, a synchronization technology, a HARQ technology, and another technology are enhanced. However, in existing terrestrial communication, a network side may complete positioning of a terminal device, or complete verification of a location reported by the terminal device. However, a 3GPP satellite communication system does not have this function. Therefore, how to perform a verification on a location reported by a terminal device by a communication satellite and further position the terminal device will be a future research direction.

### SUMMARY

Embodiments of this application provide a positioning method and a communication apparatus, to position a terminal device.

According to a first aspect, an embodiment of this application provides a positioning method. The method includes: A terminal device determines a first timing advance TA between the terminal device and an access network device at a first moment. The terminal device sends, to a network device, a first parameter corresponding to the first TA. The terminal device determines a second TA between the terminal device and the access network device at a second moment. The terminal device sends, to the network device, a second parameter corresponding to the second TA, so that the network device positions the terminal device based on the first parameter and the second parameter, or the network device sends the first parameter and the second parameter to another network device.

In the foregoing embodiment of this application, the terminal device sends, to the network device, the first parameter corresponding to the first TA at the first moment and the second parameter corresponding to the second TA at the second moment, so that the network device or another network device configured to position the terminal device can position the terminal device based on the first parameter and the second parameter. The method can be applied to a satellite communication scenario, to resolve a problem of positioning a terminal device when the terminal device can be covered only by one satellite. Further, a trigger condition may be set for the terminal device to report the second parameter. In addition, because precision of a TA may be inconsistent with precision of a corresponding parameter, to improve precision of the reported TA, a difference between the corresponding parameter and the TA may be further reported, to improve positioning precision.

In a possible implementation, a difference between the second TA and the first TA is within a preset range. In the foregoing implementation, a corresponding trigger condition is set for the terminal device to report the second parameter, so that the terminal device reports the first parameter and the second parameter that meet a preset condition, and the network device can determine a more precise TA difference based on the first parameter, the second parameter, and a preset threshold, to improve positioning precision. The trigger condition may be configured by the network device, or may be pre-agreed in a protocol.

In a possible implementation, a difference between a difference that is between the second TA and the first TA and a difference that is between the second parameter and the first parameter is within a preset range. In the foregoing implementation, similarly, a corresponding trigger condition is set for the terminal device to report the second parameter, so that the terminal device reports the first parameter and the second parameter that meet a preset condition, and the network device can determine a more precise TA difference based on the first parameter, the second parameter, and a preset threshold, to improve positioning precision.

In a possible implementation, a difference between the second moment and the first moment is within a preset range. The difference between the first moment and the second moment is movement time of the network device (a satellite). Generally, if the movement time of the network device is within the preset range, accordingly, a difference between the second TA and the first TA is also within a required difference range, so that the network device or another device can position the terminal device.

In a possible implementation, the method further includes: The terminal device sends a first difference and a second difference to the network device, where a difference between the first difference and a difference that is between the first parameter and the first TA is within a preset range, and a difference between the second difference and a difference that is between the second parameter and the second TA is within the preset range, so that the network device positions the terminal device based on the first parameter, the first difference, the second parameter, and the second difference, or the network device sends the first parameter, the first difference, the second parameter, and the second difference to another network device. Alternatively, the terminal device sends a TA difference to the network device, where a difference between the TA difference and a difference that is between the first TA and the second TA is within a preset range, so that the network device positions the terminal device based on the first parameter, the second parameter, and the TA difference; or the network device sends the first parameter, the second difference, and the TA difference to another network device. The terminal device sends the first difference and the second difference to the network device, so that the network device can determine a more precise TA, to position the terminal device more precisely.

In a possible implementation, a TA is a deviation between an uplink subframe and a downlink subframe that are obtained by the terminal device by measuring an uplink signal and a downlink signal. For example, the terminal device measures a time difference between a downlink subframe i and an uplink subframe i, and uses the time difference as the TA. In another possible implementation, a TA is determined by the terminal device based on a location of the network device relative to the terminal device.

According to a second aspect, this application provides a positioning method. The method includes: A network device receives a first parameter sent by a terminal device, where the first parameter is a parameter corresponding to a first timing advance TA between the terminal device and an access network device at a first moment. The network device receives a second parameter sent by the terminal device, where the second parameter is a parameter corresponding to a second TA between the terminal device and the access network device at a second moment. The network device positions the terminal device based on the first parameter and the second parameter, or sends the first parameter and the second parameter to another network device, so that the another network device positions the terminal device based on the first parameter and the second parameter, or the another network device sends the first parameter and the second parameter to a network device configured to position the terminal device.

In a possible implementation, a difference between the second TA and the first TA is a preset threshold.

In a possible implementation, a difference between a difference that is between the second TA and the first TA and a difference that is between the second parameter and the first parameter is within a preset range.

In a possible implementation, the method further includes: The network device receives a first difference and a second difference that are sent by the terminal device, where a difference between the first difference and a difference that is between the first parameter and the first TA is within a preset range, and a difference between the second difference and a difference that is between the second parameter and the second TA is within the preset range. That the network device positions the terminal device based on the first parameter and the second parameter includes: The network device determines the first TA based on the first difference and the first parameter; the network device determines the second TA based on the second difference and the second parameter; and the network device positions the terminal device based on the first TA and the second TA. Alternatively, the method further includes: The network device sends the first difference and the second difference to the another network device.

In a possible implementation, the method further includes: The network device receives a TA difference sent by the terminal device, where a difference between the TA difference and a difference that is between the first TA and the second TA is within a preset range. That the network device positions the terminal device based on the first parameter and the second parameter includes: The network device positions the terminal device based on the first parameter, the second parameter, and the TA difference. Alternatively, the method further includes: The network device sends the TA difference to the another network device.

According to a third aspect, this application provides a positioning method. The method includes: A terminal device receives a first common timing advance TA broadcast by a network device. The terminal device sends a first reference signal to the network device based on the first common TA. The terminal device receives a second common TA broadcast by the network device. The terminal device sends a second reference signal to the network device based on the second common TA, so that the network device positions the terminal device based on actual receiving time of the first reference signal, time determined based on the first common TA, actual receiving time of the second reference signal, and time determined based on the second common TA.

In the foregoing embodiment, the terminal device sends a reference signal to the network device based on a common TA broadcast by the network device. Because there is a residual TA between the common TA broadcast by the network device and a TA actually required by the terminal device, the network device may determine, based on residual TAs at different moments, a difference between distances from the terminal device to the network device at different moments, and estimate location information of the terminal device. The method can be applied to a satellite communication scenario, to resolve a problem of positioning a terminal device when the terminal device can be covered only by one satellite.

In a possible implementation, the first common TA includes a first feeder TA and a first service link TA, and the second common TA includes a second feeder TA and a second service link TA. Alternatively, the first common TA includes a first service link TA, and the second common TA includes a second service link TA.

According to a fourth aspect, this application provides a positioning method. The method includes: A network device broadcasts a first common timing advance TA. The network device receives a first reference signal sent by a terminal device based on the first common TA. The network device broadcasts a second common TA. The network device receives a second reference signal sent by the terminal device based on the second common TA. The network device positions the terminal device based on actual receiving time of the first reference signal, time determined based on the first common TA, actual receiving time of the second reference signal, and time determined based on the second common TA.

In a possible implementation, the first common TA includes a first feeder TA and a first service link TA, and the second common TA includes a second feeder TA and a second service link TA. Alternatively, the first common TA includes a first service link TA, and the second common TA includes a second service link TA.

According to a fifth aspect, this application provides a positioning method. The method includes: A terminal device sends a first message to a network device through a first beam. The terminal device sends a second message to the network device through a second beam, so that the network device positions the terminal device based on a pointing direction of a beam for receiving the first message and a pointing direction of a beam for receiving the second message.

In the foregoing embodiment, the terminal device sends messages to the network device through different beams, so that the network device determines an orientation of the terminal device based on pointing directions of the beams for reception. The method can be applied to a satellite communication scenario, and in particular, to a GEO scenario, to resolve a problem that a terminal device cannot be positioned based on a TA because a satellite is stationary relative to the ground. Further, different configuration parameters such as a time-frequency resource, a scrambling/descrambling manner, a polarization manner, and a common TA may be configured for different beams, so that the network device determines the beam for receiving the message sent by the terminal device.

In a possible implementation, a scrambling manner used by the terminal device on the first beam is different from a scrambling manner used on the second beam. Alternatively, a time-frequency resource for sending the first message by the terminal device on the first beam is different from a time-frequency resource for sending the second message on the second beam. Alternatively, a polarization manner used by the terminal device on the first beam is different from a polarization manner used on the second beam.

In a possible implementation, the method further includes: The terminal device receives a first common timing advance TA through the first beam; and the terminal device receives a second common TA through the second beam, where the second common TA is different from the first common TA. That a terminal device sends a first message to a network device through a first beam includes: The terminal device sends the first message to the network device through the first beam based on the first common TA. That the terminal device sends a second message to the network device through a second beam includes: The terminal device sends the second message to the network device through the second beam based on the second common TA.

According to a sixth aspect, this application provides a positioning method. The method includes: A network device receives, through a first beam, a first message sent by a terminal device. The network device receives, through a second beam, a second message sent by the terminal device. The network device positions the terminal device based on a pointing direction of the first beam and a pointing direction of the second beam.

In a possible implementation, a descrambling manner of the network device on the first beam is different from a descrambling manner on the second beam. Alternatively, a time-frequency resource for receiving the first message by the network device on the first beam is different from a time-frequency resource for receiving the second message on the second beam. Alternatively, a polarization manner used by the network device on the first beam is different from a polarization manner used on the second beam.

In a possible implementation, the method further includes: The network device sends a first common timing advance TA through the first beam; and the network device sends a second common TA through the second beam, where the second common TA is different from the second common TA. That a network device receives, through a first beam, a first message sent by a terminal device includes: The network device receives, through the first beam based on the first common TA, the first message sent by the terminal device. That the network device receives, through a second beam, a second message sent by the terminal device includes: The network device receives, through the second beam based on the second common TA, the second message sent by the terminal device.

According to a seventh aspect, an embodiment of this application provides a communication apparatus, including a processor, and a memory and a communication interface that are separately coupled to the processor. The communication interface is configured to communicate with another device. The processor is configured to: run instructions or a program in the memory, and perform the positioning method according to any one of the first aspect and the possible implementations of the first aspect, any one of the third aspect and the possible implementations of the third aspect, or any one of the fifth aspect and the possible implementations of the fifth aspect through the communication interface.

According to an eighth aspect, an embodiment of this application provides a communication apparatus, including a processor, and a memory and a communication interface that are separately coupled to the processor. The communication interface is configured to communicate with another device. The processor is configured to: run instructions or a program in the memory, and perform the positioning method according to any one of the second aspect and the possible implementations of the second aspect, any one of the fourth aspect and the possible implementations of the fourth aspect, or any one of the sixth aspect and the possible implementations of the sixth aspect through the communication interface.

According to a ninth aspect, an embodiment of this application provides a computer-readable storage medium. The computer-readable storage medium stores computer-readable instructions. When the computer-readable instructions are run on a computer, the method according to any one of the first aspect to the sixth aspect and the possible implementations is performed.

According to a tenth aspect, an embodiment of this application provides a computer program product including instructions. When the computer program product runs on a computer, the method according to any one of the first aspect to the sixth aspect and the possible implementations is performed.

### BRIEF DESCRIPTION OF DRAWINGS

FIG. 1 is a diagram of a UL-TOA algorithm according to an embodiment of this application;
FIG. 2 is a diagram of a UL-TDOA algorithm according to an embodiment of this application;
FIG. 3 is a diagram of a UL-AOA algorithm according to an embodiment of this application;
FIG. 4a, FIG. 4b, and FIG. 4c are diagrams of application scenarios of satellite communication according to embodiments of this application;
FIG. 5 is a schematic flowchart of a positioning method according to an embodiment of this application;
FIG. 6 is a diagram of TAs of a terminal device at different moments according to an embodiment of this application;
FIG. 7 is a schematic flowchart of another positioning method according to an embodiment of this application;
FIG. 8 is a diagram of sending reference signals by a terminal device at different moments according to an embodiment of this application;
FIG. 9 is a schematic flowchart of still another positioning method according to an embodiment of this application;
FIG. 10 is a diagram of pointing directions of different beams according to an embodiment of this application;
FIG. 11 is a diagram of a structure of a communication apparatus according to an embodiment of this application; and
FIG. 12 is a diagram of a structure of another communication apparatus according to an embodiment of this application.

### DESCRIPTION OF EMBODIMENTS

There are a plurality of methods for positioning a terminal device in a terrestrial communication network. For example, the terminal device is positioned based on a delay, a delay difference, a receiving angle, and the like of a reference signal. Several common positioning methods are separately described below.

### -Uplink time of arrival (uplink time of arrival, UL-TOA) method

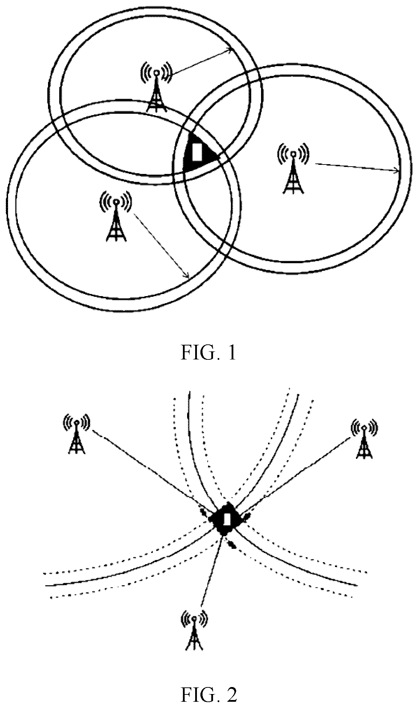

A plurality of base stations each measure time of arrival of a received reference signal sent by the terminal device, and calculate a distance between the base station and the terminal device based on the time of arrival and the speed of light. Each base station draws a circle by using the base station as a center and the distance between the base station and the terminal device as a radius, as shown in FIG. 1. Then, a location of the terminal device is estimated by using a positioning algorithm such as a trilateral positioning algorithm or a least square algorithm.

### -Uplink time difference of arrival (uplink time difference of arrival, UL-TDOA) method

A disadvantage of the UL-TOA method is that if time is not synchronized between the base station and the terminal device, neither the base station nor the terminal device knows absolute time for sending a signal, resulting in a calculation and positioning error.

However, in the UL-TDOA method, a difference between distances from the terminal device to two base stations is calculated by measuring a time difference of arrival of signals between the terminal device and the two base stations. From a mathematical perspective, the terminal device is located on a hyperbola that uses the two base stations as focal points and uses the difference between the distances from the terminal device to the two base stations as a fixed difference. Locations of the terminal device and a plurality of base stations are on the hyperbola that uses the two base stations as the focal points and uses the distance difference as the fixed difference. Based on the foregoing principle, a plurality of hyperbolas may be obtained by using three or more base stations around the terminal device. An intersection point of the hyperbolas may be the location of the terminal device, as shown in FIG. 2.

### -Uplink angle of arrival (uplink angle of arrival, UL-AOA) method

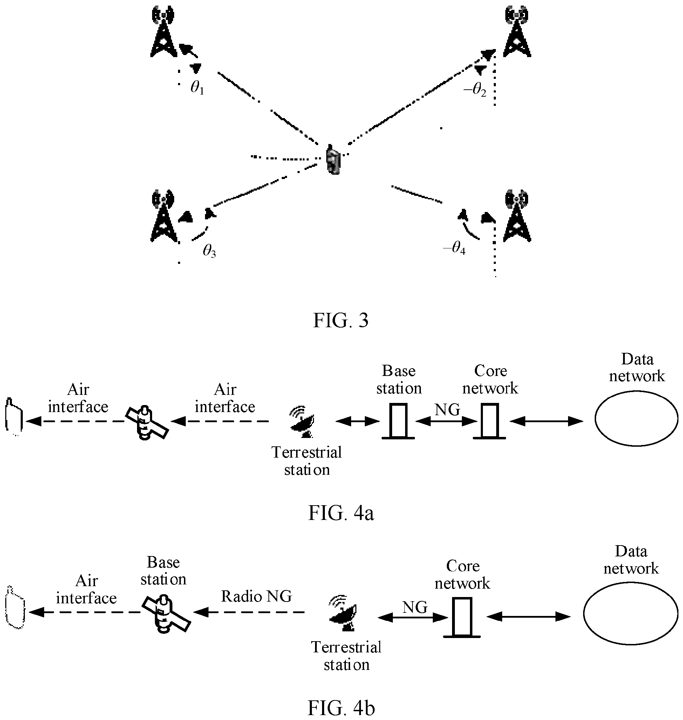

Base stations measure angles of arrival, for example, *θ*₁, -*θ*₂, *θ*₃, and -*θ*₄ in FIG. 3, based on beams for sending reference signals by the terminal device, and then send the angles of arrival obtained through measurement to a network device used for positioning. The network device positions the terminal device based on a location of each base station and the angle of arrival obtained through measurement by the base station.

### -Reference signal received power (reference signal received power, RSRP) method

A value of power at which reference signals reflected by the terminal device are received by a plurality of surrounding base stations is measured. A ratio of distances between the terminal device and the plurality of base stations may be determined based on the measured power. Then, the terminal device is positioned based on a location of each base station and the ratio of the distances between the terminal device and the plurality of base stations.

However, in a satellite communication scenario, a distance between a terminal device and a satellite is very long, and consequently a transmission delay is large. The terminal device compensates for the transmission delay, to be specific, determines a timing advance (timing advance, TA), and performs sending in advance based on the determined TA. The terminal device may report the determined TA to the satellite. However, because the terminal device reports the TA in a unit of slot, and a granularity is coarse, for example, an actual TA is 5.5 ms, the terminal device reports the TA in a unit of slot, one slot is 1 ms when a subcarrier spacing is 15 kHz, and in this case, the TA reported by the terminal device is six slots. If the terminal device is positioned based on the TA reported by the terminal device and based on the UL-TOA method or the UL-TDOA method, an error is large.

However, when the UL-AOA method is used for positioning, the base station needs to measure an angle of arrival based on an antenna array. Currently, the satellite usually uses parabolic antennas instead of the antenna array. Therefore, the UL-AOA method is also not applicable to terminal device positioning in the satellite communication scenario.

Because the distance between the terminal device and the satellite is very long, a difference between RSRP is very small, and detection ambiguity is high. Therefore, the RSRP method is also not applicable to terminal device positioning in the satellite communication scenario.

In addition, all of the foregoing methods depend on a case in which a plurality of base stations receives, for measurement, the reference signals sent by the terminal device. However, in the satellite communication scenario, a scenario in which the terminal device is located in coverage areas of the plurality of satellites is rare. Therefore, terminal device positioning jointly performed by the plurality of satellites has a great limitation.

It can be learned that a common terminal device positioning method on the ground cannot be directly applied to the satellite communication scenario. In view of this, embodiments of this application provide a positioning method that can be applied to a satellite communication scenario, to meet a requirement for positioning a terminal device in the satellite communication scenario.

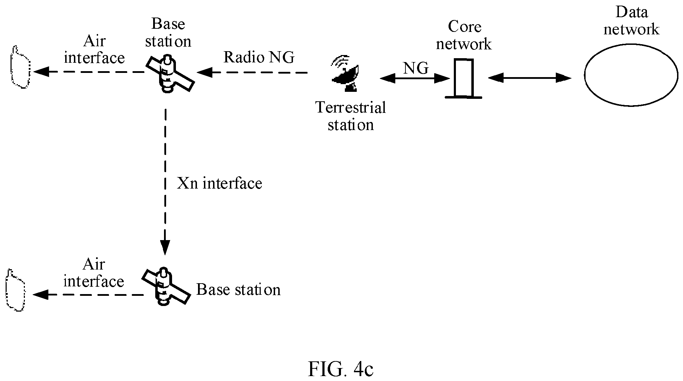

FIG. 4a, FIG. 4b, and FIG. 4c provide examples of possible application architectures of satellite communication. The positioning method provided in embodiments of this application can be applied to any one of the network architectures in FIG. 4a, FIG. 4b, and FIG. 4c.

In the architecture shown in FIG. 4a, a base station is deployed on the ground, a satellite is connected to a gateway through an air interface, and the gateway may be connected to the base station through a wireless or wired link. A terminal device on the ground accesses a mobile communication network through an air interface (where there may be various types of air interfaces, for example, a 5G air interface), and the satellite is used as a transmission node to forward information about the terminal device.

In the architecture shown in FIG. 4b, a base station is deployed on a satellite, the satellite is connected to a gateway through an air interface, and the gateway may be connected to a core network through a wireless or wired link. A terminal device on the ground communicates with the satellite base station through the air interface, to access a mobile communication network. As a base station, the satellite is connected to the gateway through an NG interface of the air interface, and the gateway is connected to the core network through the NG interface. The NG interface may be in a wireless form or a wired form.

Compared with the architecture shown in FIG. 4b, in the architecture shown in FIG. 4c, a communication scenario between satellite base stations is added. Specifically, the satellite base stations may communicate with each other through an Xn interface.

In FIG. 4a to FIG. 4c, the terminal device may include various types of terminal devices that support new radio, for example, a mobile phone, a tablet computer, a vehicle-mounted terminal device, and a wearable terminal device. The terminal device may access a satellite network through an air interface and initiate a service such as a call or Internet access.

The base station is mainly configured to: provide a radio access service, schedule a radio resource to an accessing terminal device, and provide a reliable radio transmission protocol, data encryption protocol, and the like.

The core network is mainly configured to provide functions such as user access control, mobility management, session management, user security authentication, and charging. The core network includes a plurality of functional units, which may be classified into control-plane functional entities and data-plane functional entities. An access and mobility management function (AMF) entity is configured to be responsible for user access management, security authentication, mobility management, and the like. A user plane function (UPF) entity is configured to be responsible for functions such as managing user plane data transmission and traffic statistics.

The gateway is mainly responsible for forwarding signaling and service data between the satellite and the base station or between the satellite and the core network.

The air interface indicates a radio link between the terminal device and the base station.

The Xn interface indicates an interface between the satellite base stations, and is mainly used for signaling exchange such as handover.

The NG interface indicates an interface between the base station and the core network, an interface between the gateway and the core network, or an interface between the satellite base station and the gateway (where in which case, the interface is a radio link), and is mainly used to exchange signaling such as NAS signaling of the core network and service data of a user.

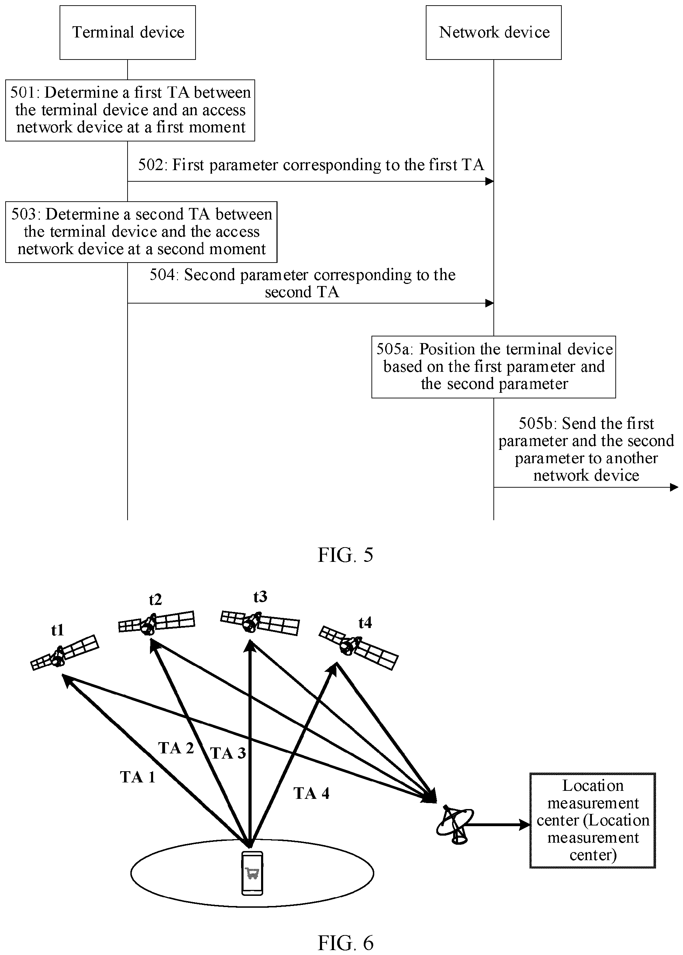

FIG. 5 is a schematic flowchart of a positioning method according to an embodiment of this application. The positioning method may be applied to a satellite communication scenario, and in particular, to a non-geostationary earth orbit (non-geostationary earth orbit, NGEO) satellite communication scenario or an unmanned aerial vehicle communication scenario. The unmanned aerial vehicle communication scenario is similar to the satellite communication scenario. For ease of description, the following uses the satellite communication scenario as an example for description.

In the NGEO satellite communication scenario, because a satellite moves relative to the ground, a distance between a terminal device and the satellite keeps changing. Because the distance keeps changing, a transmission delay between the terminal device and the satellite also keeps changing. The terminal device may adjust a TA as the distance changes, to compensate for the transmission delay. The positioning method shown in FIG. 5 is to position the terminal device by using a procedure in which the terminal device reports the TA in the satellite communication scenario.

As shown in FIG. 5, the positioning method may include the following steps.

Step 501: The terminal device determines a first TA between the terminal device and an access network device at a first moment.

When the method is applied to the network architecture shown in FIG. 4a, FIG. 4b, or FIG. 4c, the access network device herein may be the satellite that is used as a base station and that is shown in FIG. 4b or FIG. 4c, or may be the base station on the ground shown in FIG. 4a.

In the NGEO scenario, the satellite moves relative to the ground. Therefore, distances between the terminal device and the satellite may be different at different moments. However, different distances lead to different transmission delays of communication between the terminal device and the satellite. The terminal device determines a TA at the first moment. To distinguish from a TA at another moment, the TA at the first moment is referred to as a first TA.

A method for determining the TA by the terminal device is not limited in this embodiment of this application. For details, refer to any existing TA determining method. For example, when the satellite is used as a base station, and an uplink synchronization reference point is on the base station, the terminal device determines a round-trip transmission delay between the terminal device and the satellite based on a location (which may be obtained through calculation based on an ephemeris) of the satellite and a location (which may be obtained based on a global navigation satellite system (global navigation satellite system, GNSS)) of the terminal device. When the satellite is used as a transmission node, the base station is on the ground, and an uplink synchronization reference point is on the base station. The TA not only includes a round-trip transmission delay between the terminal device and the satellite, but also includes a round-trip transmission delay between the satellite and the base station on the ground. The transmission delay between the satellite and the base station on the ground is generally notified by a network device to the terminal device. When the satellite is used as a base station but a synchronization reference point is not on the base station, the TA may include a round-trip transmission delay between the terminal device and the satellite and a round-trip transmission delay between the satellite and the synchronization reference point. The delay between the satellite and the synchronization reference point is generally notified by a network device (the satellite) to the terminal device. For another example, the terminal device may measure a time difference between a downlink subframe i and an uplink subframe i, and use the time difference as the TA.

Step 502: The terminal device sends, to the network device, a first parameter corresponding to the first TA.

The network device herein may include but is not limited to a base station (gNB), an access and mobility management function (access and mobility management function, AMF) network element, and a location management function (location management function, LMF) in a 5G communication system, a base station (eNB), a transmission point (transmission point, TP), a transmission reception point (transmission reception point, TRP), and a gateway (gateway, GW) in a 4G communication system, and the like.

When the method is applied to the network architecture shown in FIG. 4a, the network device may be the satellite, the gateway, the base station, or a device in the core network. When the method is applied to the network architecture shown in FIG. 4b or FIG. 4c, the network device may be the satellite base station, the gateway, or a device in the core network.

The terminal device sends, to the network device, the first parameter corresponding to the first TA, so that the network device or another device can position the terminal device based on the first parameter. For example, the network device may determine, based on parameters corresponding to TAs at a plurality of moments, a difference between distances between the terminal device and the access network device at the plurality of moments, to perform positioning based on the distance difference.

The terminal device may report the first parameter in a plurality of reporting manners.

In a possible implementation, the first parameter may be in a unit of slot. Currently, the terminal device usually reports the TA in a unit of slot. In this case, the terminal device determines a quantity of first slots corresponding to the first TA, that is, the first parameter. It is assumed that the first TA determined by the terminal device is 4.4 ms. When a subcarrier spacing is 15 kHz, one slot is 1 ms. In this case, 4.4 ms correspond to five slots. In other words, the first parameter is five slots. In this manner, when reporting the first parameter corresponding to the first TA, the terminal device may transmit the first parameter based on an existing signaling format, and there are few modifications to an existing communication standard.

In another possible implementation, the first parameter may alternatively be in a unit of millisecond, microsecond, or the like. If a unit of the first TA determined by the terminal device is the same as the unit of the reported first parameter, for example, both the first TA and the first parameter are in a unit of millisecond, the determined first parameter is the first TA. The first parameter may alternatively be obtained by rounding the first TA. For example, if the first TA determined by the terminal device is 5.6 ms, and 5.6 ms is rounded up to 6 ms, the first parameter is 6 ms.

Alternatively, the terminal device may determine, in another pre-agreed manner, the first parameter corresponding to the first TA. This is not limited in this embodiment of this application.

Optionally, when sending the first parameter to the network device, the terminal device may further send, to the network device, indication information indicating the first moment, so that the network device determines location information of the access network device at the first moment, and positions the terminal device based on the location information of the access network device at the first moment and the first parameter in a subsequent operation.

Step 503: The terminal device determines a second TAbetween the terminal device and the access network device at a second moment.

In the scenario shown in FIG. 4a, FIG. 4b, or FIG. 4c, because the satellite moves relative to the ground, a distance between the terminal device and the satellite at the second moment may be different from a distance between the terminal device and the satellite at the first moment, and accordingly, the TAs are also different. For example, as shown in FIG. 6, a TA of the terminal device at a moment t1 is a TA 1, a TA at a moment t2 is a TA 2, a TA at a moment t3 is a TA 3, and a TA at a moment t4 is a TA 4. Only the distance between the terminal device and the satellite at the first moment can be determined only based on the TA at the first moment, but a location of the terminal device cannot be determined. In this case, the terminal device further needs to determine a TA at the second moment, to calculate the distance between the terminal device and the satellite at the second moment or calculate a difference between the distance at the first moment and the distance at the second moment, so as to determine location information of the terminal device. For ease of distinguishing, the TA determined at the second moment is referred to as a second TA.

A manner in which the terminal device determines the second TA at the second moment is the same as a manner in which the terminal device determines the first TA at the first moment. Details are not described herein again.

When the terminal device is in a moving state, if an interval between the first moment and the second moment is large, because movement of the terminal device causes large displacement of the terminal device, the interval between the second moment and the first moment is not appropriate to be excessively large. Optionally, the interval between the second moment and the first moment may be set to be within a preset time range, to ensure precision of positioning the terminal device.

Step 504: The terminal device sends, to the network device, a second parameter corresponding to the second TA.

The terminal device sends, to the network device, the second parameter corresponding to the second TA, so that the network device or the another device can position the terminal device based on the first parameter and the second parameter. For example, the network device may determine, based on the first parameter and the second parameter, a difference between the distances between the terminal device and the access network device at the first moment and the second moment, to perform positioning based on the distance difference.

A method for determining the second parameter by the terminal device based on the second TA is the same as a method for determining the first parameter based on the first TA. For example, the terminal device determines, in step 502, a first slot corresponding to the first TA, and determines, in step 504, a second slot corresponding to the second TA. Alternatively, the terminal device determines, in step 502, a first quantity of milliseconds corresponding to the first TA, and determines, in step 504, a second quantity of milliseconds corresponding to the second TA.

Optionally, when sending the second parameter to the network device, the terminal device may further send, to the network device, indication information indicating the second moment, so that the network device determines location information of the satellite at the second moment. Because the satellite moves at a high speed, and a location of the satellite at the first moment is different from a location of the satellite at the second moment, the terminal device is positioned based on the location information of the satellite at the second moment and the second parameter in a subsequent operation.

After the terminal device sends the first parameter and the second parameter to the network device, the network device may perform step 505a, or the network device may perform step 505b. Details are as follows.

Step 505a: The network device positions the terminal device based on the first parameter and the second parameter.

In this implementation, the network device may position the terminal device.

For example, the network device may determine a first distance between the terminal device and the access network device at the first moment based on the first parameter and the speed of light, and determine a second distance between the terminal device and the access network device at the second moment based on the second parameter and the speed of light. The network device draws a circle by using a location of the access network device at the first moment as a center and the first distance as a radius, draws a circle by using a location of the access network device at the second moment as a center and the second distance as a radius, and then estimates a location of the terminal device by using a positioning algorithm such as a trilateral positioning algorithm or a least square algorithm.

For another example, the network device may alternatively determine, based on the first parameter and the second parameter, the difference between the distance between the terminal device and the access network device at the first moment and the distance between the terminal device and the access network device at the second moment, and then estimate the location of the terminal device based on a location of the access network device at the first moment, a location of the access network device at the second moment, and the distance difference.

Step 505b: The network device sends the first parameter and the second parameter to another network device.

In this implementation, the network device does not position the terminal device, but the another network device positions the terminal device. For example, when the network device is the satellite that is used as a transmission node and that is shown in FIG. 4a, the network device does not undertake a function of the base station. In this case, the satellite may send the received first parameter and second parameter to the base station on the ground, and the base station on the ground positions the terminal device based on the first parameter and the second parameter. Alternatively, the base station on the ground may send the first parameter and the second parameter to a network device, for example, an LMF, used for positioning, and the network device used for positioning positions the terminal device based on the first parameter and the second parameter. For another example, the satellite is used as a base station, but the base station does not perform an operation of positioning the terminal device, and the another network device positions the terminal device. In this case, the satellite may alternatively send the first parameter and the second parameter to a network device used for positioning.

Optionally, when sending the first parameter and the second parameter to the another network device, the network device may alternatively send the location information of the satellite at the first moment and the location information of the satellite at the second moment to the another network device, so that the another network device can position the terminal device based on the location of the satellite at the first moment, the first parameter, the location of the satellite at the second moment, and the second parameter. Alternatively, the another network device may obtain the location of the satellite at the first moment and the location of the satellite at the second moment through calculation based on an ephemeris.

As described above, the first parameter and the second parameter may be in a unit of slot. In this implementation, transmission is performed based on an existing signaling format, and there are few modifications to an existing communication standard. However, reporting is performed in a unit of slot, a granularity is coarse, and it is difficult to precisely represent a corresponding TA. Therefore, to improve positioning precision, based on the foregoing positioning method, the following four implementations are provided, so that the network device obtains a more precise parameter used for positioning.

Manner 1: A difference between the second TA and the first TA may be set to a preset threshold. To be specific, when the terminal device determines that a TA at a current moment and the first TA at the first moment reach the preset difference, the current moment is the second moment, and the terminal device sends, to the network device, the second parameter corresponding to the TA at the second moment. It should be understood that the difference between the second TA and the first TA being exactly the preset threshold is an ideal case. In an actual operation process, the difference between the second TA and the first TA only needs to be within a preset range.

In the foregoing manner, a corresponding trigger condition (to be specific, the TA at the current moment and the first TA at the first moment reach the preset difference) is set for the terminal device to report the second parameter, so that the terminal device reports the first parameter and the second parameter that meet a preset condition, and the network device can determine a more precise TA difference based on the first parameter, the second parameter, and the preset threshold, to improve positioning precision. The trigger condition may be configured at a network side, or may be agreed in a protocol.

For example, it is assumed that the preset range is [0.5-δ, 0.5+δ] or [-0.5-δ, -0.5+δ] (unit: ms), where δ represents an allowed error value, and a subcarrier spacing is 15 kHz. When the terminal device determines that the TA at the moment t1 is 5.6 ms, the terminal device sends, to the network device, indication information indicating six slots. The terminal device continuously updates a TA value. When the terminal device determines that the TA reaches 6.1 ms at the moment t2, because a difference between 6.1 ms and 5.6 ms is within the preset range, the terminal device sends, to the network device, the second parameter corresponding to the TA at the moment t2, in other words, indication information indicating seven slots. In this case, although the indication information received by the network device twice indicates six slots and seven slots respectively, the network device determines, based on the preset threshold, that the difference between the TAs of the terminal device at the moment t2 and the moment t1 is 0.5 ms, and positions the terminal device based on an accurate TA difference, or sends the difference between the TAs at the moment t2 and the moment t1 to a gateway, or may directly forward, to the gateway, the information sent by the terminal device, so that the gateway sends the information to a device configured to position the terminal device.

For another example, it is assumed that the preset threshold is 0.5 ms, and a subcarrier spacing is 15 kHz. When the terminal device determines that the TA at the moment t1 is 4.4 ms, the terminal device sends, to the network device, indication information indicating five slots. The terminal device continuously updates a TA value. When the terminal device determines that the TA reaches 4.4+0.5=4.9 ms at the moment t2, the terminal device sends, to the network device, the indication information indicating five slots. In this case, although the indication information received by the network device twice indicates five slots, the network device determines, based on the preset threshold, that the difference between the TAs of the terminal device at the moment t2 and the moment t1 is 0.5 ms, to position the terminal device.

Manner 2: A difference between a TA at a current moment and the first TA may be referred to as a TA difference, and a difference between a parameter corresponding to the TA at the current moment and the first parameter is referred to as a parameter difference. When the terminal device determines that a difference between the parameter difference at the current moment and the TA difference is a preset threshold, the current moment is the second moment, and the terminal device sends, to the network device, the second parameter corresponding to the TA at the second moment. It should be understood that the difference between the parameter difference and the TA difference being exactly the preset threshold is an ideal case. In an actual operation process, the difference between the parameter difference and the TA difference only needs to be within a preset range.

In the foregoing manner, similarly, a corresponding trigger condition (to be specific, the difference between the parameter difference at the current moment and the TA difference is the preset threshold) is set for the terminal device to report the second parameter. However, the trigger condition is different from that in the manner 1, so that the terminal device reports the first parameter and the second parameter that meet a preset condition, and the network device can determine a more precise TA difference based on the first parameter, the second parameter, and the preset threshold, to improve positioning precision. The trigger condition may be configured at a network side, or may be agreed in a protocol.

For example, it is assumed that the preset threshold is 1 ms, the preset range is ±0.05 ms, and a subcarrier spacing is 15 kHz. When the terminal device determines that the TA at the moment t1 is 4.4 ms, and the corresponding first parameter is five slots, the terminal device sends, to the network device, indication information indicating five slots. The terminal device continuously updates a TA value. When the terminal device determines that the TA reaches 5.42 ms at the moment t2, the parameter corresponding to the TA is six slots. The TA difference is 5.42-4.4=1.02 ms, the parameter difference is one slot and is equal to 1 ms, and the difference between the TA difference and the parameter difference is 0.02 ms and is within the preset range. In this case, the terminal device sends, to the network device, the second parameter, in other words, indication information indicating six slots. In this case, the network device may determine the difference between the TAs at the moment t2 and the moment t1 based on the difference between the parameters at the moment t2 and the moment t1, to position the terminal device.

Manner 3: A difference between the second moment and the first moment is within a preset range. The difference between the first moment and the second moment is movement time of the network device (the satellite). Generally, if the movement time of the network device is within the preset range, accordingly, a difference between the second TA and the first TA is also within a required difference range, so that the network device or another device can position the terminal device.

In the foregoing manner, similarly, a corresponding trigger condition (to be specific, a difference between a current moment and the first moment is within the preset range) is set for the terminal device to report the second parameter, so that the terminal device reports the first parameter and the second parameter that meet a preset condition, and the network device can perform high-precision positioning based on the first parameter, the second parameter, and the preset range. The trigger condition may be configured at a network side, or may be agreed in a protocol.

Manner 4: After reporting the first parameter corresponding to the first TA, the terminal device may further send a first difference between the first parameter and the first TA to the network device, for example, send the first difference to the network device by using a non-access stratum (NAS) message, so that the network device sends the first difference to a network device configured to position the terminal device. After reporting the second parameter corresponding to the second TA, the terminal device may send a second difference between the second parameter and the second TA to the network device, for example, send the second difference to the network device by using the NAS message, so that the network device sends the second difference to the network device configured to position the terminal device.

The terminal device reports the first parameter and the second parameter based on existing signaling for reporting a TA to the network device. In this way, regardless of whether the network device in step 502 and step 504 completes the positioning procedure for the terminal device, the network device can obtain a related parameter for positioning the terminal device. However, in consideration of security, a user may expect a network device with low security not to parse the related parameter. Therefore, the terminal device may separately send the first difference and the second difference that can be used for precise positioning, so that the network device does not parse the first difference or the second difference, but directly forwards the first difference and the second difference to the network device used for positioning.

For example, it is assumed that a subcarrier spacing is 15 kHz. The terminal device determines that the TA at the moment t1 is 4.4 ms, the corresponding first parameter is five slots, and the first difference is 5-4.4=0.6 ms. After reporting the five slots to the network device, the terminal device sends information about the difference of 0.6 ms to the network device by using the NAS message, so that the network device sends the information to an LMF. The terminal device determines that the TA at the moment t2 is 5.6 ms, the corresponding second parameter is six slots, and the first difference is 6-5.6=0.4 ms. After reporting the six slots to the network device, the terminal device sends information about the difference of 0.4 ms to the network device by using the NAS message, so that the network device sends the information to the LMF, and the LMF can determine the TAs of the terminal device at the moment t1 and the moment t2, to position the terminal device.

Optionally, the terminal device may alternatively send the first difference and the second difference to the network device together, and does not need to separately send the first difference and the second difference each time after determining the difference.

It should be understood that, in an ideal case, the first difference reported by the terminal device is strictly equal to the difference between the first parameter and the first TA, and the second difference is strictly equal to the difference between the second parameter and the second TA. However, in an actual operation, the first difference reported by the terminal device and an actual first difference may be within a preset range. For example, the preset range may be [-0.5, 0.5], (-0.5, 0.5], or [-0.5, 0.5), and in a unit of ms. The second difference reported by the terminal device and an actual second difference may also be within the preset range. For example, the terminal device determines that precision of the first difference and the second difference can reach 0.01 ms, but the precision of the difference is only 0.1 ms when the terminal device sends information. In this case, the terminal device cannot send the precise first difference and the precise second difference to the network device.

In addition, the terminal device may further report the first parameter and the corresponding first difference to the network device. For example, the TA 1 determined by the terminal device at the moment 1 is 6.5 ms, a parameter 1 is seven slots (corresponding to 7 ms), and the first difference is 7-6.5=0.5 ms. In this case, the terminal device may report the parameter 1 and the first difference, in other words, seven slots and 0.5 ms. The TA 2 determined by the terminal device at the moment 2 is 6.3 ms, the second parameter is six slots (corresponding to 6 ms), and the second difference is -0.3 ms. In this case, the terminal device may report the parameter 2 and the second difference, in other words, six slots and -0.3 ms.

Optionally, the terminal device may be configured to report the first parameter and the first difference to the LFM, or may report the first parameter to the network device, and report the second parameter to the LMF.

Manner 5: The terminal device may send a difference between the first TA and the second TA to the network device. For example, it is assumed that a subcarrier spacing is 15 kHz. The terminal device determines that the first TA at the moment t1 is 4.4 ms, and the corresponding first parameter is five slots; and determines that the second TA at the moment t2 is 5.6 ms, and the corresponding second parameter is six slots. In this case, the difference between the first TA and the second TA is 4.4 ms-5.6 ms=-1.2 ms. In addition to sending the first parameter and the second parameter to the network device, the terminal device may further send the difference of -1.2 ms between the first TA and the second TA (or the difference of 1.2 ms between the second TA and the first TA) to the network device. The network device can position the terminal device based on the difference between the TAs at the moment t2 and the moment t1.

It should be understood that, in an ideal case, the difference between the first TA and the second TA reported by the terminal device can be strictly equal to an actual TA difference. However, in an actual operation, the difference between the TAs reported by the terminal device and the actual TA difference only needs to be within a preset range.

In the manner 1 to the manner 5, the first parameter and the second parameter that are reported by the terminal device are parameters for positioning, and need to meet the conditions in the foregoing manners. However, a parameter that is reported by the terminal device based on an existing procedure and that is used only for determining a TA does not need to meet the foregoing conditions. Optionally, to distinguish the parameter that is used for positioning and that is reported in this embodiment of this application from the parameter used only for determining the TA, when reporting the first parameter and the second parameter, the terminal device may include indication information in a sent message, to indicate that the parameters reported this time are parameters used for positioning.

In the foregoing embodiment of this application, the terminal device sends, to the network device, the first parameter corresponding to the first TA at the first moment and the second parameter corresponding to the second TA at the second moment, so that the network device or the another network device configured to position the terminal device can position the terminal device based on the first parameter and the second parameter. The method can be applied to the satellite communication scenario, to resolve a problem of positioning a terminal device when the terminal device can be covered only by one satellite. Further, a trigger condition may be set for the terminal device to report the second parameter. In addition, because precision of a TA may be inconsistent with precision of a corresponding parameter, to improve precision of the reported TA, a difference between the corresponding parameter and the TA may be further reported, to improve positioning precision.

In the foregoing embodiment, an example in which the terminal device reports the first parameter at the first moment and the second parameter at the second moment is used for description. During actual application, the terminal device may further report parameters corresponding to more moments, to improve precision of positioning the terminal device. For example, the network device may position the terminal device based on parameters reported by the terminal device at four moments. A manner of determining a third parameter corresponding to a third TA at a third moment and a fourth parameter corresponding to a fourth TA at a fourth moment is the same as a manner of determining the second parameter corresponding to the second TA at the second moment.

An embodiment of this application further provides a positioning method, to resolve a problem of positioning a terminal device in a satellite communication scenario or an unmanned aerial vehicle communication scenario. The method is particularly applicable to an NGEO satellite communication scenario.

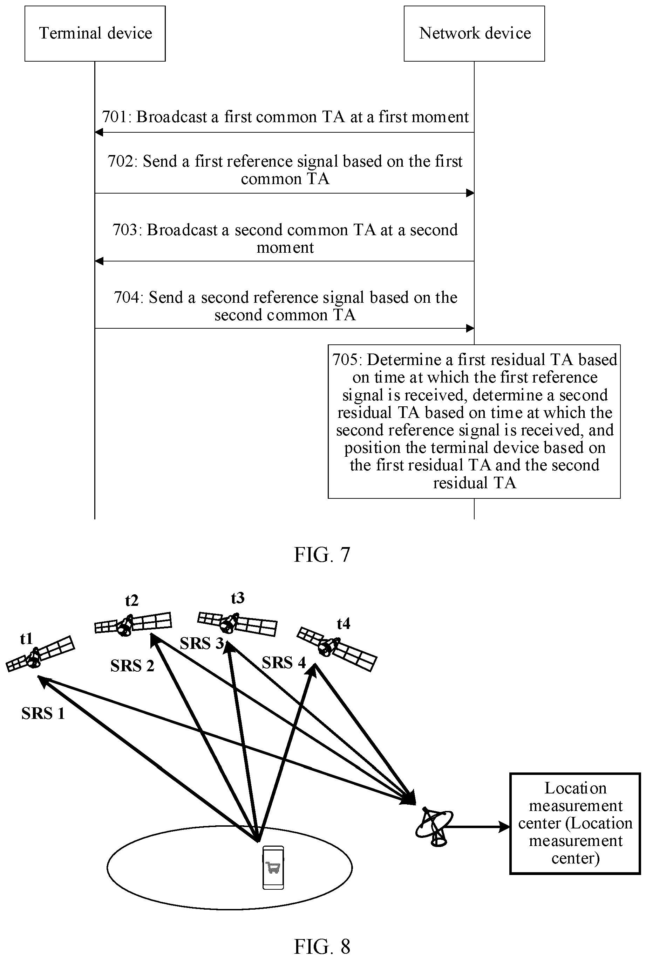

A schematic flowchart of the positioning method may be shown in FIG. 7, and the positioning method includes the following steps.

Step 701: A network device broadcasts a first common TA at a first moment.

The network device herein may include but is not limited to a base station (gNB), an access and mobility management function (access and mobility management function, AMF) network element, and a location management function (location management function, LMF) in a 5G communication system, a base station (eNB), a transmission point (transmission point, TP), a transmission reception point (transmission reception point, TRP), and a gateway (gateway, GW) in a 4G communication system, and the like.

When the method is applied to the network architecture shown in FIG. 4a, FIG. 4b, or

FIG. 4c, a satellite (including a satellite base station or a satellite used as a transmission point) may be used as the network device in the method shown in FIG. 7; the gateway may be used as the network device in the method shown in FIG. 7; the base station on the ground may be used as the network device in the method shown in FIG. 7; or a device in a core network may be used as the network device in the method shown in FIG. 7.

The network device may broadcast a common TA to the terminal device. The common TA may not necessarily meet a requirement of each terminal device for compensation for a transmission delay, but can help the terminal device complete an access procedure.

Step 702: The terminal device sends a first reference signal to the network device based on the first common TA.

In this embodiment of this application, even if the terminal device has calculated a TA actually required by the terminal device, during positioning, the terminal device still sends a reference signal to the network device based on the first common TA broadcast by the network device. If the first common TA cannot meet the requirement of the terminal device for compensation for the transmission delay, time at which the first reference signal sent by the terminal device based on the first common TA actually arrives at the network device, that is, time at which the network device receives the first reference signal, may be different from time at which the network device expects to receive the first reference signal based on the first common TA, and a difference between the two types of time may be referred to as a residual TA. Specifically, a residual TA generated when the reference signal is sent based on the first common TA may be referred to as a first residual TA.

Step 703: The network device broadcasts a second common TA at a second moment.

To facilitate a newly accessing terminal device to complete the access procedure, the network device may frequently broadcast the common TA. The second common TA broadcast by the network device at the second moment may be the same as or different from the first common TA.

Step 704: The terminal device sends a second reference signal to the network device based on the second common TA.

As described above, during positioning, the terminal device does not consider the TA actually required by the terminal device, and still sends the second reference signal to the network device based on the broadcast second common TA. Specifically, time at which the second reference signal sent by the terminal device based on the second common TA actually arrives at the network device, that is, time at which the network device receives the second reference signal, may be different from time at which the network device expects to receive the second reference signal based on the second common TA, and the difference between the two types of time is referred to as a second residual TA.

Step 705: The network device determines the first residual TA based on the time at which the first reference signal is received, determines the second residual TA based on the time at which the second reference signal is received, and positions the terminal device based on the first residual TA and the second residual TA.

For example, the network device determines, based on the first residual TA and the second residual TA, a difference between a distance between the terminal device and the network device at the first moment and a distance between the terminal device and the network device at the second moment, and then estimates a location of the terminal device based on a location of the network device at the first moment, a location of the network device at the second moment, and the distance difference.

The residual TA determined by the network device may be in a unit of slot, in a unit of ms, or in another time unit.

The common TA broadcast by the network device may be a feeder TA and a service link common TA, or may include only the service link common TA. A feeder link is a communication link between the satellite and the gateway, and the feeder TA is a TA when the satellite communicates with the gateway. A service link is a communication link between the satellite and the terminal device, and the service link common TA is a TA when the terminal device communicates with the satellite. When the network device is a satellite base station, the common TA may not include the feeder TA, and the terminal device sends the reference signal only based on the service link common TA.

Optionally, the network device may alternatively send the first residual TA and the second residual TA to another device that can be used for positioning, so that the another device positions the terminal device.

In the foregoing embodiment, the terminal device sends a reference signal to the network device based on a common TA broadcast by the network device. Because there is a residual TA between the common TA broadcast by the network device and the TA actually required by the terminal device, the network device may determine, based on residual TAs at different moments, a difference between distances from the terminal device to the network device at different moments, and estimate location information of the terminal device. The method can be applied to a satellite communication scenario, to resolve a problem of positioning a terminal device when the terminal device can be covered only by one satellite.

In the foregoing embodiment, an example in which the terminal device reports the first reference signal based on the first common TA and reports the second reference signal based on the second common TA is used. During actual application, the terminal device may further report a reference signal based on more common TAs, so that the network device determines more residual TAs, to improve precision of positioning the terminal device. For example, as shown in FIG. 8, the satellite base station may broadcast the first common TA at a moment t1, and the terminal sends an SRS 1 based on the first common TA; the satellite base station may broadcast the second common TA at a moment t2, and the terminal sends an SRS 2 based on the second common TA; the satellite base station may broadcast a third common TA at a moment t3, and the terminal sends an SRS 3 based on the third common TA; and the satellite base station may broadcast a fourth common TA at a moment t4, and the terminal sends an SRS 4 based on the fourth common TA. In this case, the satellite base station can determine four residual TAs, to position the terminal based on the four residual TAs, or send the determined residual TAs to a location measurement center, so that the location measurement center positions the terminal.

In a geostationary earth orbit (geostationary earth orbit, GEO) satellite communication scenario, because a satellite is stationary relative to the earth, for a terminal device in a stationary state, a TA does not change; for a terminal device in a moving state, a change of a TA may be too small to trigger a reporting procedure. Therefore, the foregoing method for positioning the terminal device based on a parameter corresponding to a TA is not applicable to the GEO satellite communication scenario.

Therefore, an embodiment of this application further provides a positioning method. The positioning method may be applied to a satellite communication scenario, a geostationary earth orbit (geostationary earth orbit, GEO) satellite communication scenario, or an NGEO satellite communication scenario. In the method, a terminal device is positioned based on a pointing direction of a beam.

When a carrier frequency is high, a radio signal transmitted at the carrier frequency undergoes severe fading in a space propagation process, and even it is difficult for a receive end to detect the radio signal. Therefore, a beamforming (beamforming, BF) technology may be used to obtain a beam having good directivity, to increase power in a transmit direction and increase a signal to interference plus noise ratio (signal to interference plus noise ratio, SINR) at the receive end. When the transmit end and the receive end communicate through narrow beams, better communication quality is obtained only when the beams used for sending and receiving are aligned in pointing directions. The two aligned beams may be referred to as a beam pair. A satellite may communicate with terminal devices in different orientations through beams having different pointing directions. A terminal device may alternatively communicate with transceiver nodes (such as satellites) in different orientations through beams having different pointing directions.

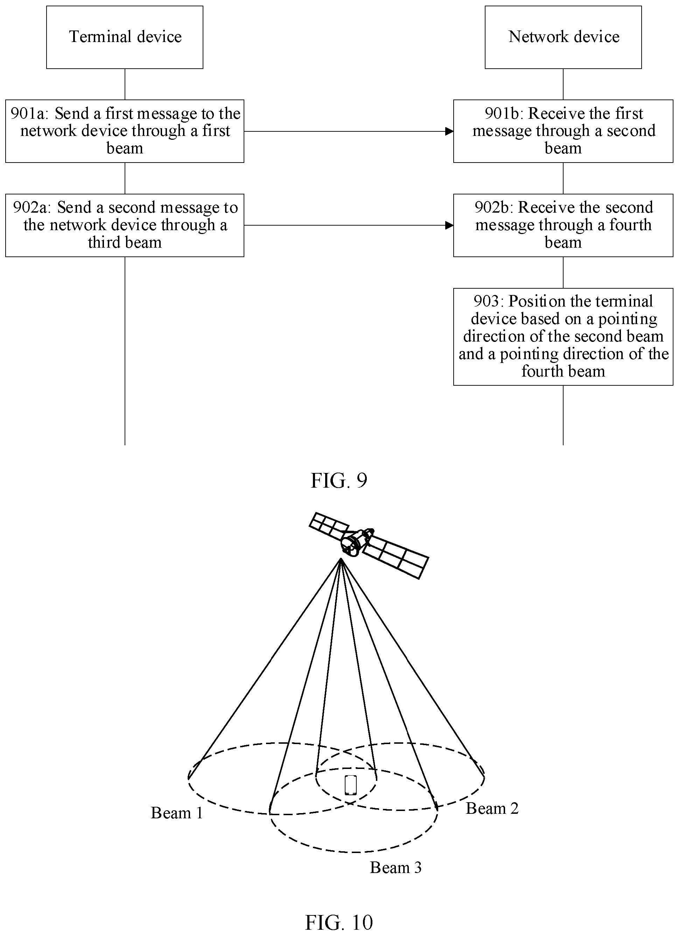

Based on the foregoing technology, a schematic flowchart of the positioning method may be shown in FIG. 9, and the positioning method includes the following steps.

Step 901a: The terminal device sends a first message to a network device through a first beam.

Step 901b: The network device receives the first message through a second beam.

The network device herein may include but is not limited to a base station (gNB), an access and mobility management function (access and mobility management function, AMF) network element, and a location management function (location management function, LMF) in a 5G communication system, a base station (eNB), a transmission point (transmission point, TP), a transmission reception point (transmission reception point, TRP), and a gateway (gateway, GW) in a 4G communication system, and the like.

When the method is applied to the network architecture shown in FIG. 4a, FIG. 4b, or FIG. 4c, the satellite (including a satellite base station or a satellite used as a transmission point) may be used as the network device in the method shown in FIG. 9; or another device on the ground may be used as the network device in the method shown in FIG. 9. When the network device is a device on the ground, the satellite reflects information received through different beams, so that the network device on the ground receives the information through different beams.

The first beam of the terminal device and the second beam of the network device can form a beam pair. To be specific, the network device can receive, through the second beam, a message sent by the terminal device through the first beam, and the terminal device can receive, through the first beam, a message sent by the network device through the second beam. For ease of distinguishing, the first beam of the terminal device and the second beam of the network device may be referred to as a beam pair 1.

Step 902a: The terminal device sends a second message to the network device through a third beam.

Step 902b: The network device receives the second message through a fourth beam.

To ensure communication quality, there is an overlapping part in spatial ranges covered by beams having different pointing directions, so that the network device and the terminal device can communicate with each other through the beam pair 1 or a beam pair 2.

The third beam of the terminal device and the fourth beam of the network device can form a beam pair. To be specific, the network device can receive, through the fourth beam, a message sent by the terminal device through the third beam, and the terminal device can receive, through the third beam, a message sent by the network device through the fourth beam. For ease of distinguishing, the third beam of the terminal device and the fourth beam of the network device may be referred to as a beam pair 2.

Step 903: The network device positions the terminal device based on a pointing direction of the second beam and a pointing direction of the fourth beam.

After receiving, through the second beam and the fourth beam, the messages sent by the terminal device, the network device may determine that the terminal device is located in an area covered by both the second beam and the fourth beam, to position the terminal device.

To help the network device identify a beam through which received information is received, different time-frequency resources may be allocated to messages transmitted through different beam pairs. Specifically, the network device may allocate different time-frequency resources to reference signals transmitted through different beam pairs, and notify the terminal device of the allocated time-frequency resources. For example, a beam a of the network device and a beam a' of the terminal device can form a beam pair A, and a beam b of the network device and a beam b' of the terminal device can form a beam pair B. The network device allocates a time-frequency resource 1 to a sounding reference signal (sounding reference signal, SRS) transmitted through the beam pair A, and allocates a time-frequency resource 2 to an SRS transmitted through the beam pair B. In this case, when receiving the SRS, the network device may determine, based on the time-frequency resource for receiving the SRS, the beam through which the SRS is received.

Alternatively, the network device may configure different scrambling/descrambling manners for information transmitted through different beam pairs. The network device configures a scrambling/descrambling manner 1 for the beam pair 1, and configures a scrambling/descrambling manner 2 for the beam pair 2. In this case, when the terminal device sends a message to the network device through the beam in the beam pair 1, a manner 1 is used for scrambling; when the terminal device sends a message to the network device through the beam in the beam pair 2, a manner 2 is used for scrambling. When receiving the message, the network device may determine, based on the descrambling manner, the beam through which the received message is received.

Alternatively, different polarization manners may be configured for different beam pairs. For example, the network device and the terminal device use a vertical polarization manner on the beam pair 1, and use a horizontal polarization manner on the beam pair 2.

Alternatively, the network device may configure different common TAs (which may be a feeder TA and a service link common TA, or may only be a service link common TA) for different beam pairs. When sending messages to the network device through different beams, the terminal device sends the messages based on a common TA corresponding to a beam pair that serves the terminal device, so that different residual TAs are generated on different beam pairs. In this case, the network device may determine, based on the different residual TAs, the beam through which the received message is received.

In another possible implementation, after receiving information sent by the network device through the second beam, the terminal device may perform step 901a. In this case, the first message sent by the terminal device may include an identifier of the second beam or an identifier of the beam pair 1. Correspondingly, after receiving information sent by the network device through the fourth beam, the terminal device may perform step 902a. In this case, the second message sent by the terminal device may include an identifier of the fourth beam or an identifier of the beam pair 2.

In the foregoing embodiment, the terminal device sends messages to the network device through different beams, so that the network device determines an orientation of the terminal device based on pointing directions of the beams for reception. The method can be applied to a satellite communication scenario, and in particular, to a GEO scenario, to resolve a problem that a terminal device cannot be positioned based on a TA because a satellite is stationary relative to the ground. Further, different configuration parameters such as a time-frequency resource, a scrambling/descrambling manner, a polarization manner, and a common TA may be configured for different beams, so that the network device determines the beam for receiving the message sent by the terminal device.

In the foregoing embodiment, an example in which the network device communicates with the terminal device through two beam pairs is used. During actual application, more beam pairs may be used to improve precision of positioning the terminal device. For example, as shown in FIG. 10, the network device configures a common TA 1 for the terminal device through a beam 1, configures a common TA 2 for the terminal device through a beam 2, and configures a common TA 3 for the terminal device through a beam 3. Because the terminal device is located in an area jointly covered by the three beams, the terminal device may correspondingly send reference signals to the network device through the three beams. In this case, after receiving, through the beam 1, the beam 2, and the beam 3 respectively, the reference signals sent by the terminal device, the network device can determine that the terminal device is located in the area jointly covered by the three beams. In this way, the terminal device is positioned more precisely.

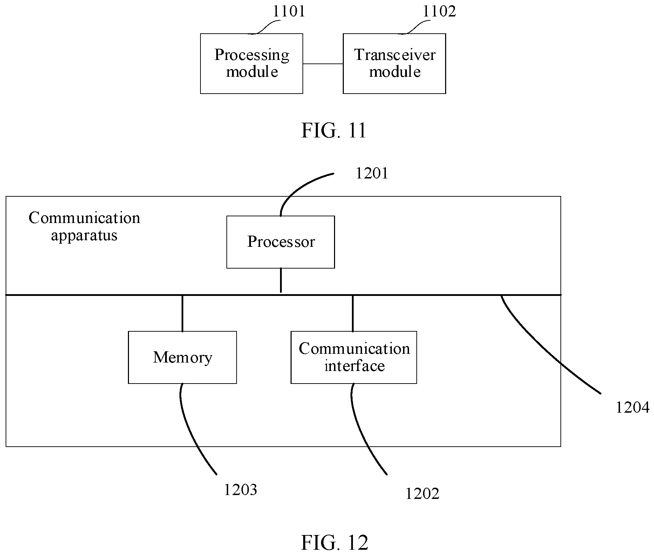

FIG. 11 is a diagram of a communication apparatus according to an embodiment of this application. The communication apparatus includes a processing module 1101 and a transceiver module 1102. The processing module 1101 is configured to implement data processing performed by the communication apparatus. The transceiver module 1102 is configured to perform information receiving and sending processing in the foregoing method embodiments. It should be understood that the processing module 1101 in this embodiment of this application may be implemented by a processor or a processor-related circuit component (or referred to as a processing circuit), and the transceiver module 1102 may be implemented by a receiver, a receiver-related circuit component, a transmitter, or a transmitter-related circuit component.

For example, the communication apparatus may be a communication apparatus device, or may be a chip used in the communication apparatus device, or another combined device or component that has a function of the communication apparatus device.

When the communication apparatus implements the embodiment shown in FIG. 5 as a terminal device, the processing module 1101 is configured to determine a first timing advance TA between the terminal device and an access network device at a first moment. The transceiver module 1102 is configured to send, to a network device, a first parameter corresponding to the first TA. The processing module 1101 is further configured to determine a second TA between the terminal device and the access network device at a second moment. The transceiver module 1102 is further configured to send, to the network device, a second parameter corresponding to the second TA, so that the network device positions the terminal device based on the first parameter and the second parameter, or the network device sends the first parameter and the second parameter to another network device.

In addition, the foregoing modules may be further configured to support another process performed by the terminal device in the embodiment shown in FIG. 5 and any implementation of the embodiment. For beneficial effects, refer to the foregoing descriptions. Details are not described herein again.

When the communication apparatus implements the embodiment shown in FIG. 5 as a network device, the transceiver module 1102 receives a first parameter sent by a terminal device, where the first parameter is a parameter corresponding to a first timing advance TA between the terminal device and an access network device at a first moment; and receives a second parameter sent by the terminal device, where the second parameter is a parameter corresponding to a second TA between the terminal device and the access network device at a second moment. The processing module 1101 is configured to position the terminal device based on the first parameter and the second parameter. Alternatively, the transceiver module 1102 sends the first parameter and the second parameter to another network device, so that the another network device positions the terminal device based on the first slot and the second slot, or the another network device sends the first parameter and the second parameter to a network device configured to position the terminal device.

In addition, the foregoing modules may be further configured to support another process performed by the network device in the embodiment shown in FIG. 5 and any implementation of the embodiment. For beneficial effects, refer to the foregoing descriptions. Details are not described herein again.

When the communication apparatus implements the embodiment shown in FIG. 7 as a terminal device, the transceiver module 1102 is configured to: receive a first common timing advance TA broadcast by a network device; and send, under control of the processing module 1101, a first reference signal to the network device based on the first common TA. The transceiver module 1102 is further configured to: receive a second common TA broadcast by the network device; and send, under control of the processing module 1101, a second reference signal to the network device based on the second common TA, so that the network device positions the terminal device based on actual receiving time of the first reference signal, time determined based on the first common TA, actual receiving time of the second reference signal, and time determined based on the second common TA.

In addition, the foregoing modules may be further configured to support another process performed by the terminal device in the embodiment shown in FIG. 7 and any implementation of the embodiment. For beneficial effects, refer to the foregoing descriptions. Details are not described herein again.

When the communication apparatus implements the embodiment shown in FIG. 7 as a network device, the transceiver module 1102 is configured to: broadcast a first common timing advance TA; receive a first reference signal sent by a terminal device based on the first common TA; broadcast a second common TA; and receive a second reference signal sent by the terminal device based on the second common TA. The processing module 1101 is configured to position the terminal device based on actual receiving time of the first reference signal, time determined based on the first common TA, actual receiving time of the second reference signal, and time determined based on the second common TA.

In addition, the foregoing modules may be further configured to support another process performed by the network device in the embodiment shown in FIG. 7 and any implementation of the embodiment. For beneficial effects, refer to the foregoing descriptions. Details are not described herein again.

When the communication apparatus implements the embodiment shown in FIG. 9 as a terminal device, the transceiver module 1102 sends, under control of the processing module 1101, a first message to a network device through a first beam, and sends a second message to the network device through a second beam, so that the network device positions the terminal device based on a pointing direction of a beam for receiving the first message and a pointing direction of a beam for receiving the second message.

In addition, the foregoing modules may be further configured to support another process performed by the terminal device in the embodiment shown in FIG. 9 and any implementation of the embodiment. For beneficial effects, refer to the foregoing descriptions. Details are not described herein again.

When the communication apparatus implements the embodiment shown in FIG. 9 as a network device, the transceiver module 1102 is configured to: receive, through a first beam, a first message sent by a terminal device; and receive, through a second beam, a second message sent by the terminal device. The processing module 1101 is configured to position the terminal device based on a pointing direction of the first beam and a pointing direction of the second beam.

In addition, the foregoing modules may be further configured to support another process performed by the network device in the embodiment shown in FIG. 9 and any implementation of the embodiment. For beneficial effects, refer to the foregoing descriptions. Details are not described herein again.

Based on a same technical concept, an embodiment of this application further provides a communication apparatus. The communication apparatus includes a processor 1201 shown in FIG. 12 and a communication interface 1202 connected to the processor 1201.

The processor 1201 may be a general-purpose processor, a microprocessor, an application-specific integrated circuit (application-specific integrated circuit, ASIC), a field programmable gate array (field programmable gate array, FPGA), or another programmable logic device, a discrete gate or a transistor logic device, one or more integrated circuits configured to control program execution of the solutions in this application, or the like. The general-purpose processor may be a microprocessor, any conventional processor, or the like. The steps of the methods disclosed with reference to embodiments of this application may be directly performed and completed by using a hardware processor, or may be performed and completed by using a combination of hardware and software modules in the processor.

The communication interface 1202 uses any apparatus of a transceiver type to communicate with another device or a communication network such as RAN.

In this embodiment of this application, the processor 1201 is configured to invoke the communication interface 1202 to perform a receiving and/or sending function, and perform the positioning method according to any one of the foregoing possible implementations.

Further, the communication apparatus may include a memory 1203 and a communication bus 1204.

The memory 1203 is configured to store program instructions and/or data, so that the processor 1201 invokes the instructions and/or the data stored in the memory 1203, to implement the foregoing functions of the processor 1201. The memory 1203 may be a read-only memory (read-only memory, ROM) or another type of static storage device that can store static information and instructions, a random access memory (random access memory, RAM) or another type of dynamic storage device that can store information and instructions, or an electrically erasable programmable read-only memory (electrically erasable programmable read-only memory, EEPROM) or any other medium that can be used to carry or store expected program code in a form of instructions or a data structure and that can be accessed by a computer, but is not limited thereto. The memory 1203 may exist independently, for example, an off-chip memory, and is connected to the processor 1201 through the communication bus 1204. The memory 1203 may be alternatively integrated with the processor 1201.

The communication bus 1204 may include a path for transmitting information between the foregoing components.

For example, the communication apparatus may be the terminal device in the foregoing method embodiments, or may be the network device in the foregoing method embodiments.

The processor 1201 is configured to implement a data processing operation of the communication apparatus. The communication interface 1202 is configured to implement a receiving operation and a sending operation of the communication apparatus.

When the communication apparatus implements the embodiment shown in FIG. 5 as a terminal device, the processor 1201 is configured to perform the following operations through the communication interface 1202: determining a first timing advance TA between the terminal device and an access network device at a first moment; sending, to a network device, a first parameter corresponding to the first TA; determining a second TA between the terminal device and the access network device at a second moment; sending, to the network device, a second parameter corresponding to the second TA, so that the network device positions the terminal device based on the first parameter and the second parameter, or the network device sends the first parameter and the second parameter to another network device.

In addition, the foregoing modules may be further configured to support another process performed by the terminal device in the embodiment shown in FIG. 5 and any implementation of the embodiment. For beneficial effects, refer to the foregoing descriptions. Details are not described herein again.

When the communication apparatus implements the embodiment shown in FIG. 5 as a network device, the processor 1201 is configured to perform the following operations through the communication interface 1202: receiving a first parameter sent by a terminal device, where the first parameter is a parameter corresponding to a first timing advance TA between the terminal device and an access network device at a first moment; and receiving a second parameter sent by the terminal device, where the second parameter is a parameter corresponding to a second TA between the terminal device and the access network device at a second moment; positioning the terminal device based on the first parameter and the second parameter, or sending the first parameter and the second parameter to another network device, so that the another network device positions the terminal device based on the first slot and the second slot, or the another network device sends the first parameter and the second parameter to a network device configured to position the terminal device.

In addition, the foregoing modules may be further configured to support another process performed by the network device in the embodiment shown in FIG. 5 and any implementation of the embodiment. For beneficial effects, refer to the foregoing descriptions. Details are not described herein again.

When the communication apparatus implements the embodiment shown in FIG. 7 as a terminal device, the processor 1201 is configured to perform the following operations through the communication interface 1202: receiving a first common timing advance TA broadcast by a network device; sending a first reference signal to the network device based on the first common TA; receiving a second common TA broadcast by the network device; and sending a second reference signal to the network device based on the second common TA, so that the network device positions the terminal device based on actual receiving time of the first reference signal, time determined based on the first common TA, actual receiving time of the second reference signal, and time determined based on the second common TA.

In addition, the foregoing modules may be further configured to support another process performed by the terminal device in the embodiment shown in FIG. 7 and any implementation of the embodiment. For beneficial effects, refer to the foregoing descriptions. Details are not described herein again.

When the communication apparatus implements the embodiment shown in FIG. 7 as a network device, the processor 1201 is configured to perform the following operations through the communication interface 1202: broadcasting a first common timing advance TA; receiving a first reference signal sent by a terminal device based on the first common TA; broadcasting a second common TA; receiving a second reference signal sent by the terminal device based on the second common TA; and positioning the terminal device based on actual receiving time of the first reference signal, time determined based on the first common TA, actual receiving time of the second reference signal, and time determined based on the second common TA.

In addition, the foregoing modules may be further configured to support another process performed by the network device in the embodiment shown in FIG. 7 and any implementation of the embodiment. For beneficial effects, refer to the foregoing descriptions. Details are not described herein again.

When the communication apparatus implements the embodiment shown in FIG. 9 as a terminal device, the processor 1201 is configured to perform the following operations through the communication interface 1202: sending a first message to a network device through a first beam; and sending a second message to the network device through a second beam, so that the network device positions the terminal device based on a pointing direction of a beam for receiving the first message and a pointing direction of a beam for receiving the second message.

In addition, the foregoing modules may be further configured to support another process performed by the terminal device in the embodiment shown in FIG. 9 and any implementation of the embodiment. For beneficial effects, refer to the foregoing descriptions. Details are not described herein again.

When the communication apparatus implements the embodiment shown in FIG. 9 as a network device, the processor 1201 is configured to perform the following operations through the communication interface 1202: receiving, through a first beam, a first message sent by a terminal device; receiving, through a second beam, a second message sent by the terminal device; and positioning the terminal device based on a pointing direction of the first beam and a pointing direction of the second beam.

In addition, the foregoing modules may be further configured to support another process performed by the network device in the embodiment shown in FIG. 9 and any implementation of the embodiment. For beneficial effects, refer to the foregoing descriptions.

### Details are not described herein again.

Based on a same technical concept, an embodiment of this application further provides a computer-readable storage medium. The computer-readable storage medium stores computer-readable instructions. When the computer-readable instructions run on a computer, the positioning method according to any one of the foregoing possible implementations is performed.

An embodiment of this application provides a computer program product including instructions. When the computer program product runs on a computer, the foregoing method embodiments are enabled to be performed.

In descriptions of embodiments of this application, the term "and/or" describes an association relationship between associated objects and indicates that three relationships may exist. For example, A and/or B may indicate the following three cases: Only A exists, both A and B exist, and only B exists. "A plurality of" in this application means two or more.

In addition, it should be understood that, in the descriptions of this application, the terms "first", "second", "third", and the like are merely intended for a purpose of distinguishing for description, and shall not to be understood as an indication or implication of relative importance, or an indication or implication of a sequence. Reference to "an embodiment", "some embodiments", or the like described in this specification means that one or more embodiments of this application include a specific feature, structure, or characteristic described with reference to embodiments. Therefore, statements, for example, "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "comprise", "include", "have", and variants thereof all mean "include but are not limited to", unless otherwise specifically emphasized in another manner.

An embodiment of this application provides a computer-readable storage medium storing a computer program. The computer program includes instructions for performing the foregoing method embodiments.

An embodiment of this application provides a computer program product including instructions. When the computer program product runs on a computer, the computer is enabled to perform the foregoing method embodiments.

A person skilled in the art should understand that embodiments of this application may be provided as a method, a system, or a computer program product. Therefore, this application may use a form of hardware-only embodiments, software-only embodiments, or embodiments combining software and hardware. In addition, this application may use a form of a computer program product that is implemented on one or more computer-usable storage media (including but not limited to a magnetic disk storage, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of processes and/or blocks in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of the another programmable data processing device generate an apparatus for implementing a specific function in one or more processes in the flowcharts and/or one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more processes in the flowcharts and/or one or more blocks in the block diagrams.

These computer program instructions may alternatively be loaded onto a computer or another programmable data processing device, so that a series of operations and steps are performed on the computer or the another programmable device to generate computer-implemented processing. Therefore, the instructions executed on the computer or the another programmable device provide steps for implementing a specific function in one or more processes in the flowcharts and/or one or more blocks in the block diagrams.

Although preferred embodiments of this application have been described, a person skilled in the art can make other changes and modifications to these embodiments once the basic inventive concept is learned. Therefore, the following claims are intended to be construed as to cover the preferred embodiments and all changes and modifications falling within the scope of this application.

It is clear that a person skilled in the art can make various modifications and variations to embodiments of this application without departing from the scope of embodiments of this application. In this way, this application is intended to cover these modifications and variations of embodiments of this application provided that they fall within the scope of the following claims and their equivalent technologies in this application.

## Claims

1. A positioning method, wherein the method comprises:
determining, by a first communication apparatus, a first timing advance TA between the first communication apparatus and an access network device at a first moment;
sending, by the first communication apparatus to a network device, a first parameter corresponding to the first TA;
determining, by the first communication apparatus, a second TA between the first communication apparatus and the access network device at a second moment; and
sending, by the first communication apparatus to the network device, a second parameter corresponding to the second TA, so that the network device positions the first communication apparatus based on the first parameter and the second parameter, or the network device sends the first parameter and the second parameter to another network device.

2. The method according to claim 1, wherein a difference between the second TA and the first TA is within a preset range.

3. The method according to claim 1, wherein a difference between a difference that is between the second TA and the first TA and a difference that is between the second parameter and the first parameter is within a preset range.

4. The method according to claim 1, wherein the method further comprises:
sending, by the first communication apparatus, a first difference and a second difference to the network device, wherein a difference between the first difference and a difference that is between the first parameter and the first TA is within a preset range, and a difference between the second difference and a difference that is between the second parameter and the second TA is within the preset range, so that the network device positions the first communication apparatus based on the first parameter, the first difference, the second parameter, and the second difference, or the network device sends the first parameter, the first difference, the second parameter, and the second difference to another network device; or
sending, by the first communication apparatus, a TA difference to the network device, wherein a difference between the TA difference and a difference that is between the first TA and the second TA is within a preset range, so that the network device positions the first communication apparatus based on the first parameter, the second parameter, and the TA difference, or the network device sends the first parameter, the secondparameter, and the TA difference to another network device.

5. A positioning method, wherein the method comprises:
receiving, by a second communication apparatus, a first parameter sent by a terminal device, wherein the first parameter is a parameter corresponding to a first timing advance TA between the terminal device and an access network device at a first moment;
receiving, by the second communication apparatus, a second parameter sent by the terminal device, wherein the second parameter is a parameter corresponding to a second TA between the terminal device and the access network device at a second moment; and
positioning, by the second communication apparatus, the terminal device based on the first parameter and the second parameter, or sending the first parameter and the second parameter to another network device, so that the another network device positions the terminal device based on the first parameter and the second parameter, or the another network device sends the first parameter and the second parameter to a network device configured to position the terminal device.

6. The method according to claim 5, wherein a difference between the second TA and the first TA is a preset threshold.

7. The method according to claim 5, wherein a difference between a difference that is between the second TA and the first TA and a difference that is between the second parameter and the first parameter is within a preset range.

8. The method according to claim 5, wherein the method further comprises:
receiving, by the second communication apparatus, a first difference and a second difference that are sent by the terminal device, wherein a difference between the first difference and a difference that is between the first parameter and the first TA is within a preset range, and a difference between the second difference and a difference that is between the second parameter and the second TA is within the preset range; and
the positioning, by the second communication apparatus, the terminal device based on the first parameter and the second parameter comprises:
determining, by the second communication apparatus, the first TA based on the first difference and the first parameter; determining, by the second communication apparatus, the second TA based on the second difference and the second parameter; and positioning, by the second communication apparatus, the terminal device based on the first TA and the second TA; or
the method further comprises: sending, by the second communication apparatus, the first difference and the second difference to the another network device.

9. The method according to claim 5, wherein the method further comprises:
receiving, by the second communication apparatus, a TA difference sent by the terminal device, wherein a difference between the TA difference and a difference that is between the first TA and the second TA is within a preset range; and
the positioning, by the second communication apparatus, the terminal device based on the first parameter and the second parameter comprises:
positioning, by the second communication apparatus, the terminal device based on the first parameter, the second parameter, and the TA difference; or
the method further comprises: sending, by the second communication apparatus, the TA difference to the another network device.

10. A positioning method, wherein the method comprises:
receiving, by a first communication apparatus, a first common timing advance TA broadcast by a network device;
sending, by the first communication apparatus, a first reference signal to the network device based on the first common TA;
receiving, by the first communication apparatus, a second common TA broadcast by the network device; and
sending, by the first communication apparatus, a second reference signal to the network device based on the second common TA, so that the network device positions the first communication apparatus based on actual receiving time of the first reference signal, time determined based on the first common TA, actual receiving time of the second reference signal, and time determined based on the second common TA.

11. The method according to claim 10, wherein the first common TA comprises a first feeder TA and a first service link TA, and the second common TA comprises a second feeder TA and a second service link TA; or
the first common TA comprises a first service link TA, and the second common TA comprises a second service link TA.

12. A positioning method, wherein the method comprises:
broadcasting, by a second communication apparatus, a first common timing advance TA;
receiving, by the second communication apparatus, a first reference signal sent by a terminal device based on the first common TA;
broadcasting, by the second communication apparatus, a second common TA;
receiving, by the second communication apparatus, a second reference signal sent by the terminal device based on the second common TA; and
positioning, by the second communication apparatus, the terminal device based on actual receiving time of the first reference signal, time determined based on the first common TA, actual receiving time of the second reference signal, and time determined based on the second common TA.

13. The method according to claim 12, wherein the first common TA comprises a first feeder TA and a first service link TA, and the second common TA comprises a second feeder TA and a second service link TA; or
the first common TA comprises a first service link TA, and the second common TA comprises a second service link TA.

14. A positioning method, wherein the method comprises:
sending, by a first communication apparatus, a first message to a network device through a first beam; and
sending, by the first communication apparatus, a second message to the network device through a second beam, so that the network device positions the first communication apparatus based on a pointing direction of the first beam for receiving the first message and a pointing direction of a beam for receiving the second message.

15. The method according to claim 14, wherein a scrambling manner used by the first communication apparatus on the first beam is different from a scrambling manner used on the second beam; or
a time-frequency resource for sending the first message by the first communication apparatus on the first beam is different from a time-frequency resource for sending the second message on the second beam; or
a polarization manner used by the first communication apparatus on the first beam is different from a polarization manner used on the second beam.

16. The method according to claim 14 or 15, wherein the method further comprises:
receiving, by the first communication apparatus, a first common timing advance TA through the first beam; and
receiving, by the first communication apparatus, a second common TA through the second beam, wherein the second common TA is different from the first common TA;
the sending, by a first communication apparatus, a first message to an access network device through a first beam comprises:
sending, by the first communication apparatus, the first message to the access network device through the first beam based on the first common TA; and
the sending, by the first communication apparatus, a second message to the access network device through a second beam comprises:
sending, by the first communication apparatus, the second message to the access network device through the second beam based on the second common TA.

17. A positioning method, wherein the method comprises:
receiving, by a second communication apparatus through a first beam, a first message sent by a terminal device;
receiving, by the second communication apparatus through a second beam, a second message sent by the terminal device; and
positioning, by the second communication apparatus, the terminal device based on a pointing direction of the first beam and a pointing direction of the second beam.

18. The method according to claim 17, wherein a descrambling manner of the second communication apparatus on the first beam is different from a descrambling manner on the second beam; or
a time-frequency resource for receiving the first message by the second communication apparatus on the first beam is different from a time-frequency resource for receiving the second message on the second beam; or
a polarization manner used by the second communication apparatus on the first beam is different from a polarization manner used on the second beam.

19. The method according to claim 17 or 18, wherein the method further comprises:
sending, by the second communication apparatus, a first common timing advance TA through the first beam; and
sending, by the second communication apparatus, a second common TA through the second beam, wherein the second common TA is different from the second common TA;
the receiving, by a second communication apparatus through a first beam, a first message sent by a terminal device comprises:
receiving, by the second communication apparatus through the first beam based on the first common TA, the first message sent by the terminal device; and
the receiving, by the second communication apparatus through a second beam, a second message sent by the terminal device comprises:
receiving, by the second communication apparatus through the second beam based on the second common TA, the second message sent by the terminal device.

20. A communication apparatus, wherein the communication apparatus comprises a processor, and a memory and a communication interface that are separately coupled to the processor, the communication interface is configured to communicate with another device, and the processor is configured to: run instructions or a program in the memory, and perform the method according to any one of claims 1 to 19 through the communication interface.

21. A computer-readable storage medium, wherein the computer-readable storage medium stores instructions, and when the instructions are run on a computer, the computer is enabled to perform the method according to any one of claims 1 to 19.

22. A communication system, comprising a terminal device and a network device, wherein the terminal device is configured to perform the method according to any one of claims 1 to 4, 10, 11, and 14 to 16, and the network device is configured to perform the method according to any one of claims 5 to 9, 12, 13, and 17 to 19.
